# EUROPEAN PATENT SPECIFICATION

(11) **EP 0 716 015 B1**
(45) Date of publication and mention of the grant of the patent: **07.08.2002**
(21) Application number: 95830135.0
(22) Date of filing: 05.04.1995
(51) Int. Cl.: B64D 17/72, B64D 17/80, B64C 31/028

(54) **Ejecting pneumatic device for emergency parachute to be used with paragliders, hang-gliders or other types of aerodyne and aerostat**
Pneumatische Schnellöffnungseinrichtung für Rettungsfallschirme für Gleitschirme, Drachen oder dgl.
Dispositif pneumatique d'éjection pour parachute de secours pour parapente, planeurs aile delta ou similaires

(30) Priority: 07.04.1994 IT PR940015
(43) Date of publication of application: 12.06.1996
(73) Proprietor: Comelli, Giordano, 43100 Parma (IT)
(72) Inventor: Comelli, Giordano, 43100 Parma (IT)

(56) References cited:
- EP-A- 0 336 910
- FR-A- 494 095
- GB-A- 2 069 425
- US-A- 2 564 209

## Description

The invention concerns a pneumatic ejecting device for emergency parachute according to the preamble of claim 1.
In order to identify the application field of the device, it's important to remember that para-gliders and hang-gliders carry with themselves an emergency parachute which is manually pulled out of its container and ejected, if necessary. The ejection implies the stretching of the tie rope and of the suspension and sailing ropes. Once the parachute has stretched out, it will take air and swell. Its swelling will hold up the pilot and slow down the falling speed.
Pilots of engine-driven hang-gliders and ultra-light aircrafts are equipped with an emergency parachute with pull-eject devices. The source of energy is constituted by gas charges, rockets, mortars, springs and pulling leads. Once the parachute has been ejected and stretched out, it takes in air and swells, thus supporting 'glider and pilot' by means of a rope connecting the parachute to the framework of the aircraft.

Pre-existing techniques are characterised by the presence of a safety parachute which is ejected manually or mechanically.
Mechanically by ***ejecting device*** I mean a device that ejects the whole parachute and throws it into the air, whereas the ***stretching device*** is the one that pulls the parachute into the air and stretches it out.

In a stretching device the source of energy for stretch the parachute could be a small ejecting parachute, a ballistic projectile launched with the help of different forms of energy., a rocket.
In a ejecting device the source of energy could be a spring, air compressed, or trust of gases that derive from combustion or chemical reaction.
The expansion of these gases could be in fixed-geometry cylinders with sliding pistons (as in Patent EP0336910A), or in axial bellow with wavy profile (as in Patent US 2564209 A).

The object of the invention is a device that can be used to eject the safety parachute of paragliders, hangliders and other aerodynes and aerostats into a predetermined direction, at such a speed as to ensure a quick and safe parachute opening.
This object is achieved with a device according to claim 1.
The version for the ejection of a paraglider safety parachute consists of a 25-centimetre diameter plate to be placed between pilot and emergency parachute. In its ready-to-eject position, the device only measures a few centimetres in height. It enables the pilot to use - for an extremely powerful ejection- the energy of a gas compressed into a bottle. Through the opening of a rapid discharge valve the gas expands into a fabric container which acts as bellows. The immediate swelling of the expanding bag causes the movement of the parachute, which is drawn away from the pilot and by inertia will stretch out into the air. In the tested pneumatic ejection, the device has a total length of about 35 centimetres.
Versions of the emergency parachute ejecting-device suitable for the support of aerodynes and aerostats (with or without engine) with full-load weights of several hundreds of kilograms, might have larger dimensions and sizes.
The geometry of the device is meant to contain weight and dimension as much as possible.
In addition, the device will allow a manual ejection of the emergency parachute. Such a device allows the ejection of a safety parachute for para, hang-gliders and other types of aerodynes and aerostats whenever an emergency suggests or requires its use (such an ejection can be made either manually or pneumatically).
When the device is used pneumatically, the parachute will be ejected into a predetermined direction at such a speed as to ensure quick and safe opening.

In respect to ***ejecting or stretching*** the present device belongs to the former class.
The technical advantages are:
. the remarkable reductions of the overall dimension with regard to the longitudinal direction of pneumatic actioning,
. the low number of components that reduce the weight and increase simplicity and reliability of the system,
. rounded and ribbed shape of the components that ensure high resistance to the parts of the device in respect to the powerful trust of high air pressure requested
. the provision of a powerful ejection energy due to the fact that that the gas bottle is so close to the flexible element to guarantees a very low gas pressure failure and high ejection power
. the possibility of making alternative manual ejection feasible.

In comparison with this system, a classical bellow cannot be realised in material resistant as necessary to withstand the high level of tension reached and in a way capable to be extended in a such high ratio in reference to initial length as requested.

The description of the device includes two drawing sheets: three figures are on the first, one figure on the second.

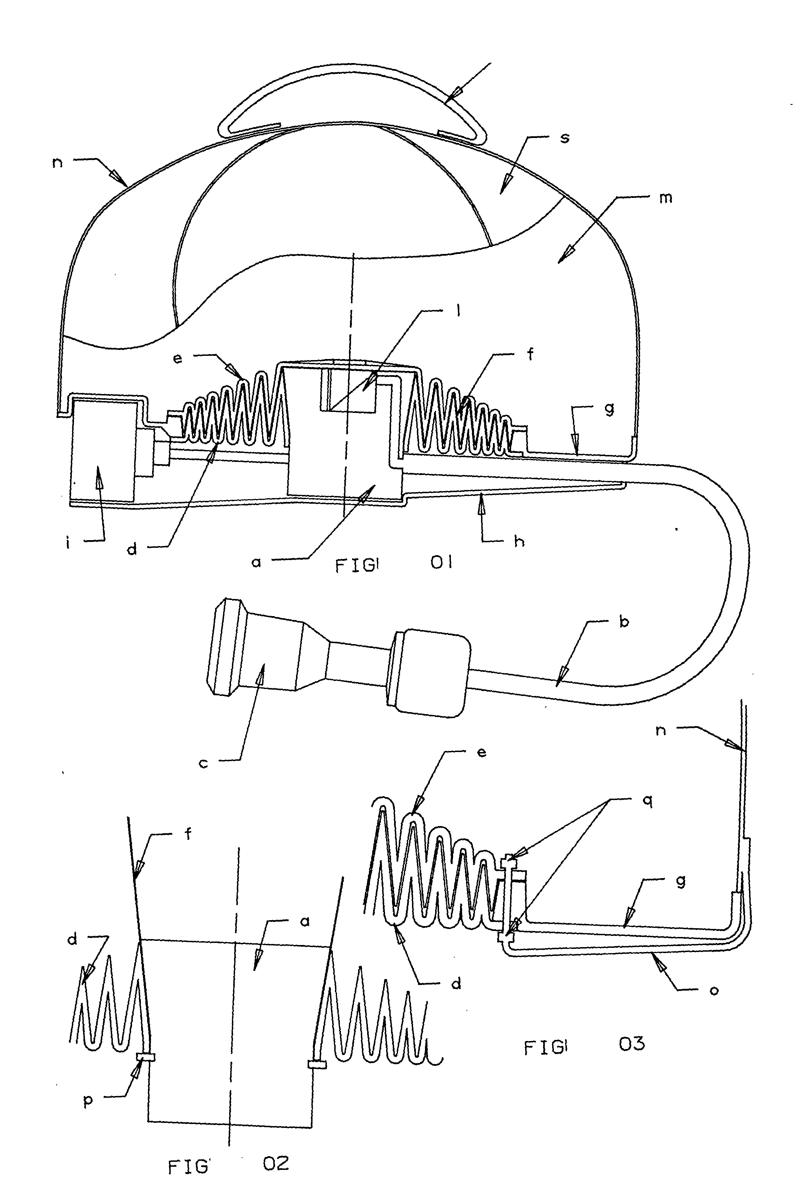

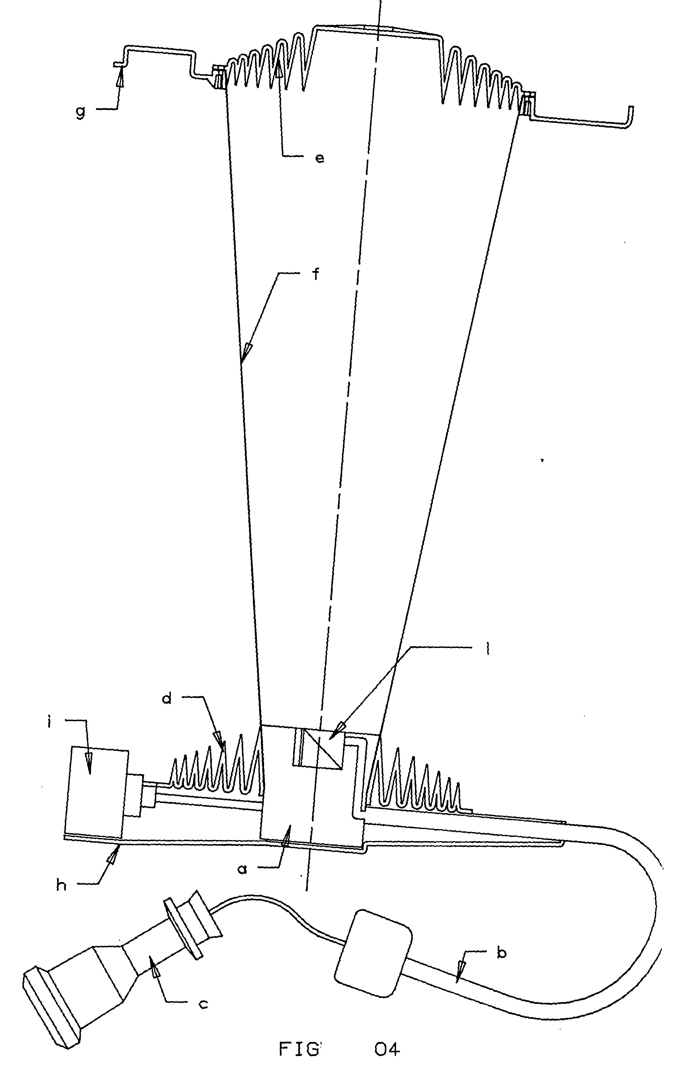

Figure no. 1 in drawing sheet nr 1 represents the device in its ready-to-eject position. Figure no.2 in drawing sheet nr 1 represents a detail of the fixing of gas bottle (letter **a**), flexible element (letter **f**), lower shell (letter **d**) and elastic ring (letter **p**). Figure no. 3 in drawing sheet nr 1 represents a detail of the connection (by means of a set breaking element ) (letter **o**) between fixes and movable parts, which is responsible for the release of the parachute bag (letter **n**). Figure no. 4 in drawing sheet nr 2 represents the device in accomplished pneumatic ejection position .
The details represented in the drawing sheets are as follows: gas bottle (letter **a**),operation cable (letter **b**), pneumatic operation handle (letter **c**), lower shell (letter **d**), upper shell (letter **e**), flexible element (letter **f**), parachute base (letter **g**), device support (letter **h**), manometer (letter **i**), quick discharge valve (letter **l**), parachute bag (letter **n**), pull device (letter **o**), elastic ring (letter **p**), knot or thickening (letter **q**), manual ejection handle (letter **r**), and openable flaps (letter **s**):
In the device you can distinguish fixed components (those parts constantly tied to pilot or aerodyne) and movable parts, which move over a distance called 'run' during the ejection. Such distance equals the length of the flexible component (f) longitudinally: Fixed components are the ones labelled with letter **a, b, c, d, h, i, l, p,** whereas the components labelled with letters **e, g, m, n, o, q, r, s, are** movable. The flexible component (letter **f**), is a movable part, but its lower end remains fixed during ejection.

### Dynamics of the pneumatic ejection

When the pilot decides to open the emergency parachute, he pulls the handle (letter c) which, by means of an operation cable (letter **b**) opens the quick discharge valve (letter **l**). The opening of this valve releases the compressed gas stored in a small bottle (letter **a**) equipped with a manometer (letter **i**). The manometer is meant to periodically check the bottle charge. That bottle (a) contains air or nitrogen or uninflammable gases. The gas release immediately swells the flexible component (f) which acts as its expansion chamber. While expanding very quickly, the flexible component (f) transmits rectilinear motion with variable acceleration to the movable components and to the parachute (m) which is released from the pilot (or aerodyne).

At the end of the stroke, while the movable parts, of the device come to a halt, held back by the flexible component (f) which has reached its maximum extension, the parachute (m) continues its motion through inertia and stretches in the air. The separation of the bag (n) from the base (g) is made possible by a special building device, as shown in drawing sheet nr 3. The separation between fixed and movable components, in particular between the upper shell (e) and the lower shell (d) due to the gradual swelling of the flexible element (f), causes the breaking of a few pull elements (o) to which the base of the parachute bag is fixed. During the very first millimetres of run, the power of the device tears up those components which are meant to keep the parachute (m) in its seat within the base (g) by means of the bag (n). The parachute (m) is therefore preceded in the ejection by its bag (n) no longer fixed to the framework: Once the parachute has stretched out according to a sequence that follows its folding up, it opens and remains connected to the pilot or aerodyne by means of a connecting rope and slows down the fall.

### Dynamics of manual ejection

Whenever the pilot wants to open the emergency parachute, and wants to do it manuallly, he can open the parachute bag (n) , which is made up of a few openable flaps (s), from the upper side, then extract the parachute (m) end throw it.

## Claims

1. A pneumatic ejection device for emergency parachute to be used with paragliders, hang-gliders, and other types of aerodynes and aerostats, engine-powered or not, comprising in combination:
. a small bottle or gas cylinder (a) filled with highly pressurised uninflammable gas;
. a quick discharge valve (1) which allows immediate discharge of the pressurised gas; and
. a gas expansion chamber into which the gas is released for providing the necessary thrust to launch the parachute (m) when the device is activated, said device **characterised by**
. said gas expansion chamber being delimited by an upper part of the gas bottle (a), a flexible element (f) of fabric rubber fixed in its lower part close to the upper part of the gas bottle and a rigid upper shell (e) fastened to the upper part of the flexible element (f); the bottle (a), the flexible element (f) and the upper shell (e) forming a flexible container which changes its shape and internal volume during the actioning of the device as the upper shell (e) moves with respect to the bottle (a) and the flexible element (f) is extended;
. the flexible element (f) having the shape of a truncated cone when extended;
. a lower shell (d) rigidly fastened to the gas bottle (a);
. the aforesaid upper and lower shells (d,e) acting as upper and lower lids to contain the flexible element (f) in a folded condition when the device is in a non-activated condition ready to be discharged;
. a base (g) in a shape of a plate surrounding and fastened to the upper shell (e) and with which it constitutes the base upon which the parachute (m) rest; and
. a fabric container (n) holding the parachute (m) and which rests on the perimeter of the base (g).

2. Device according to claim 1 **characterised by** the fact that the flexible element and the gas bottle, or any other rigid element fixed to the bottle, have the same conicity and the flexible element is inserted round the gas bottle or any other rigid element fixed to the bottle, from the bottom and by the fact that the lower shell has the same aforesaid conicity and is inserted round the gas bottle and is kept in place by an elastic ring.

3. Device according to the previous claims **characterised by** the fact that the upper shell and the base present a portion of their surface which have the same conicity as the flexible element ; the upper shell and the base rest on each other where conicity allows it, with the upper edge of the flexible element being put between the two; the upper shell and the base are fastened together by means of screws or rivets or similar.

4. Device according to the previous claims **characterised by** the fact that the shells feature contiguous toroidal elements with triangular section or other similar thin shaped section, suitable to aptly accommodate the flexible element

5. Device according to claim 4 **characterised by** the fact that in ready to ejection position, the toroidal elements of the upper shell keep the flexible element perfectly adherent to the profile of the lower shell, thus reducing to a minimum the initial harmful volume of the gas expansion chamber, which results in an intensified ejection power.

6. Device according to the previous claims 4 or 5 **characterised by** the fact that in ready to ejection position the toroidal elements of the lower shell fit perfectly with the cone-shaped flexible element and constitute the proper support for it during its progressive extension, preventing transverse tearing of the fabric under the strong action of the pressure.

7. Device according to the previous claims **characterised by** the fact that the separation between the fixed and movable components which results from the power of the gas expansion tears up small pull-set strings that hold in place the parachute fabric container.

8. Device according to the previous claims **characterised by** the fact that the parachute fabric container is openable at its top, which allows the manual extraction of the parachute by means of an handle attached to it, as an alternative to the pneumatic ejection.

## Patentansprüche

1. Pneumatische Auswurfvorrichtung für Notfallschirme für Paraglider, Drachen und andere Arten von motorisierten oder nicht motorisierten Aerodynen und Aerostaten, die kombiniert folgende Teile umfasst:
- eine kleine Flasche (a), gefüllt mit nicht brennbarem Hochdruckgas,
- ein Schnellauslassventil (1), das ein sofortiges Ausströmen des Hochdruckgases ermöglicht, sowie
- eine Expansionskammer, in die das Gas abgelassen wird, wodurch die zum Auswurf des Fallschirms (m) erforderliche Stosskraft entsteht, wenn die Vorrichtung betätigt wird.
Die genannte Vorrichtung ist wie folgt **gekennzeichnet**
- Die genannte Expansionskammer wird vom oberen Teil der Flasche (a), von einem am oberen Teil der Flasche befestigten flexiblen Element (f) aus beschichtetem Stoff und von der am oberen Teil des flexiblen Elementes (f) befestigten harten oberen Schale (e) begrenzt. Die Flasche (a), das flexible Element (f) und die obere Schale (e) bilden einen flexiblen Behälter, der bei Betätigung der Vorrichtung seine Form und sein inneres Volumen verändert, in dem Sinne, dass die obere Schale (e) sich gegenüber der Flasche (a) bewegt und das flexible Element (f) sich ausdehnt.
- Das flexible Element (f) hat in ausgedehntem Zustand die Form eines Kegelstumpfes.
- Eine untere Schale (d) ist fest mit der Flasche (a) verbunden.
- Die oben genannte obere und untere Schale (d,e) dienen als oberer und unterer Deckel und umschliessen das flexible Element (f) in gefaltetem Zustand, wenn die Vorrichtung sich in unbetätigtem, einsatzbereitem Zustand befindet.
- Ein Basisteil (g) in Tellerform umgibt die obere Schale (e), ist daran befestigt und bildet mit dieser zusammen die Basis, an der sich der Fallschirm (m) befindet.
- Ein Stoffbehälter (n) enthält den Fallschirm (m) und ist aussen am Umfang des Basisteils (g) befestigt.

2. Vorrichtung wie in Anspruch 1) beschrieben, **dadurch gekennzeichnet, dass** das flexible Element und die Flasche, oder jedes andere an der Flasche befestigte harte Element die gleiche Kegelform besitzen, dass das flexible Element von unten um die Flasche eingefügt ist und dass die untere Schale die gleiche obengenannte Kegelform besitzt und mit Hilfe eines elastischen Ringes um die Flasche herum festgehalten wird.

3. Vorrichtung wie in den vorhergehenden Ansprüchen beschrieben, **dadurch gekennzeichnet, dass** der obere Deckel und das Basisteil einen Teil ihrer Oberfläche zeigen, der die gleiche Kegelform wie das flexible Element besitzt; der obere Deckel und das Basisteil sind so aneinander befestigt, wie es die Kegelform gestattet, mit dem oberen Rand des flexiblen Elementes in der Mitte zwischen beiden; der obere Deckel und das Basisteil sind durch Schrauben, Nieten o. ä. aneinander befestigt.

4. Vorrichtung wie in den vorhergehenden Ansprüchen beschrieben, **dadurch gekennzeichnet, dass** benachbarte ringförmige Elemente mit rundom oder anderem dünnem. Querschnitt so beschaffen sind, dass das flexible Element in geeigneter Weise untergebracht werden kann.

5. Vorrichtung wie in Anspruch 4) beschrieben, **dadurch gekennzeichnet, dass** die ringförmigen Elemente der oberen Schale in einsatzbereiter Position das flexible Element genau am Profil der unteren Schale anliegen lassen, wodurch das schädliche Anfangsvolumen der Gas-Expansionskammer auf ein Minimum reduziert und somit die Auswurfkraft erhöht wird.

6. Vorrichtung wie in den Ansprüchen 4) und 5) beschrieben, **dadurch gekennzeichnet, dass** die ringförmigen Elemente der unteren Schale in einsatzbereiter Position perfekt an dem konischen flexiblen Element anliegen und während dessen progressiver Ausdehnung einen geeigneten Halt dafür bilden, wodurch ein Quereinreissen des Stoffes infolge der hohen Druckeinwirkung verhütet wird.

7. Vorrichtung wie in den vorhergehenden Ansprüchen beschrieben, **dadurch gekennzeichnet, dass** die durch die Kraft der Gasausdehnung bewirkte Trennung zwischen festen und beweglichen Bestandteilen kleine, druckgeeichte Elemente zerstört, die den Stoffbehälter des Fallschirms festhalten.

8. Vorrichtung wie in den vorhergehenden Ansprüchen beschrieben, **dadurch gekennzeichnet, dass** der Stoffbehälter des Fallschirms oben geöffnet werden kann, so dass der Fallschirm als Alternative zum pneumatischen Auswurf an einem daran befestigten Griff von Hand herausgezogen werden kann.

## Revendications

1. Dispositif pour le lancement pneumatique du parachute de secours pour le parapente, deltas et autre type de aerodynes et aérostats, avec le moteur ou pas, comprenant en combinaison:
. Une petite bonbonne (a) remplie avec un gas ininflammable à haute pression;
. un soupape à déchargement rapide (I) qui permet le déchargement immédiat du gas pressurisé; et
. une chambre_d'expansion_dans laquelle le gas est déchargé_pour_fournir_la_poussée nécessaire à lancer le parachute(m) quand le dispositif est activé, dit dispositif
**caractérisé par**:
. ditte_chambre d'expansion étant délimité à la partie supérieure de la bonbonne (a), par un élément flexible (f) de tissu gommé fixé à la partie supérieure de la bonbonne et par la coque supérieure rigide (e) fixé à la partie_supérieure de l'élément flexible (f); la bonbonne (a), l'élément flexible (f) et la coque supérieure (e) en formant un récipient flexible_qui change forme et volume intérieur pendant l'actionnement du dispositif en sorte que la coque supérieure (e) se mouve en comparaison de la bonbonne (a) et l'élément flexible (f) s'étend.
. l'élément flexible (f) quand il est étendu, a la forme du cone tronqué
. une coque inférieure (d) rigidement_fixée à la bonbonne (a)
. les cités plus haut coque supérieure et coque inférieure (d,e) fonctionnant comme couvercle supérieur et inférieur pour contenir l'élément flexible (f) en condition repliée quand le dispositif est en condition non-activée, prete a etre déchargé
. une base (g) avec la forme d'un plat qui entoure et est fixé à la coque supérieure (e) et avec le quel constituent la base sur la quelle reste le parachute (m) et,
. un récipient de tissu (n) qui contient le parachute(m) fixé sur le périmètre de la base (g)

2. dispositif en accord avec la revendication 1 **caractérisé par** le fact que l'élément flexible et la bonbonne, ou n'importe quel_élément rigide fixé à la bonbonne, ils ont la même conicité et l'élément flexible est inséré autour de la bonbonne du bas et par le fact che la coque inférieure a la même susmentionné conicité et elle est inséré autour de la bonbonne, tenu dans la siège par un anneau élastique

3. dispositif en accord avec les revendications précédentes **caractérisé par** le fact que le couvercle supérieur et la base présentent une part de la leur superface que a la même conicité de l'élément flexible; le couvercle supérieur et la base sont fixés l'un avec l'autre comme la conicité permet, avec le bord supérieur de l'élément flexible entre les deux; le couvercle supérieur et la base sont fixés ensemble par des vis, rivets ou autre

4. Dispositif en accord avec les revendications précédentes **caractérisé** du fact que les traits des éléments toroidales contigus à section triangulaire ou autre section mince sont indiqué a loger d'une façon approprié l'élément flexible.

5. Dispositif en accord avec la revendication 4 **caractérisé par** le fact que en position prête à l'expulsion, les éléments toroidales de la coque supérieure gardent l'élément flexible parfaitement adhérent au profil de la coque inférieure, dans le but de réduire au minimum l'initial volume nuisable de la chambre d'expansion du gas, avec le résultat de une augmenté puissance d'expulsion.

6. Dispositif en accord avec les revendications précédentes 4 et 5 **caractérisé** du fact que en position prete à l'expulsion, les éléments toroidales de la coque inférieure coiffent parfaitement avec l'élément flexible conique et constituent pour ce-ci l'indiqué support pendant sa progressive étendue, en prévenant la rupture transversale du tissu sous la grande action de la pression

7. Dispositif en accord avec les revendications précédentes **caractérisé** du fact que la séparation entre les composantes fixes et mobiles que résulte de la puissance de l'expulsion du gas casse les petits éléments étallones à rupture qui gardent dans la siège le récipient en tissu du parachute

8. Dispositif en accord avec les revendications précédentes **caractérisé** du fact que le récipient de tissu du parachute peut etre ouvert à la sommet en sorte que il permet l'extraction manuel du parachute parmi une poignée fixèe a lui, comme alternative du fonctionnement pneumatique
